# FASCICULE DE BREVET EUROPEEN

(11) **EP 0 481 906 B1**
(45) Date de publication et mention de la délivrance du brevet: **05.04.1995**
(21) Numéro de dépôt: 91470030.7
(22) Date de dépôt: 03.10.1991
(51) Int. Cl.: E02D 29/14, F16B 21/18

(54) **Tampon de regard de chaussée et regard comportant ce tampon**
Schachtabdeckung und Schacht mit dieser Abdeckung
Manhole cover and manhole comprising said cover

(30) Priorité: 15.10.1990 FR 9012698
(43) Date de publication de la demande: 22.04.1992
(73) Titulaire: PONT-A-MOUSSON S.A., 54017 Nancy (FR)
(72) Inventeur: Bluche, Denis, F-62217 Achicourt (FR)
(74) Mandataire: Puit, Thierry

(56) Documents cités:
- DE-C- 666 368
- FR-A- 1 529 804
- GB-A- 2 085 946

## Description

L'invention concerne un tampon de regard de chaussée du type comprenant :
- un organe de verrouillage élastiquement déformable porté par des moyens de support et en appui sur des moyens de retenue solidaires de la face inférieure du tampon, ledit organe comportant au moins un loquet en saillie vers l'extérieur du tampon ;
- et une lumière traversant le tampon sensiblement à l'aplomb dudit organe pour l'introduction d'un outil de déverrouillage.

On connaît par le document WO 86/04624 un tampon muni d'un organe de verrouillage qui est constitué par un bras élastique dont une extrémité est fixée à une nervure de rigidification du tampon et dont l'autre extrémité porte le loquet. Cet agencement connu présente l'inconvénient suivant : pour déverrouiller le tampon, il faut introduire l'outil de verrouillage à travers la lumière du tampon, puis basculer cet outil vers l'extérieur. Par suite, une autre manoeuvre, distincte, est nécessaire pour soulever le tampon.

On connaît également, par le document GB-A-2085 946, lequel constitue l'état de la technique correspondant au préambule de la revendication 1 annexée, un tampon du type précité dans lequel l'organe de verrouillage est constitué par une lame élastiquement déformable dont une extrémité est enroulée autour d'une tige de fixation solidaire de la face inférieure du tampon, l'autre extrémité comportant un loquet qui, en position verrouillée, se trouve engagé dans un logement ménagé dans la paroi interne de la jupe du cadre.

La lame prend appui sur deux plots solidaires de la face inférieure du tampon et disposés de part et d'autre de la lame à proximité de l'extrémité enroulée autour de la tige de fixation, ces plots assurant le rappel élastique de la lame lorsque celle-ci est déformée. Le déverrouillage du tampon s'effectue en introduisant une clé de manoeuvre dans une lumière traversant le tampon sensiblement à l'aplomb de la lame, puis en tournant la clé de manière à amener un pied horizontal, situé à la base de la clé, en contact avec la lame, cette dernière se déformant alors progressivement lors de la poursuite de la rotation, et ce jusqu'à libérer le loquet de la gorge du cadre dans laquelle celui-ci se trouvait engagé.

L'inconvénient de cet agencement est qu'il nécessite l'utilisation d'une clé de manoeuvre, c est-à-dire un organe présentant une configuration particulière ; de même, la lumière destinée à recevoir cette clé doit également répondre à un dimensionnement précis correspondant au profil particulier de la clé.

La présente invention remédie à ces inconvénients tout en permettant le déverrouillage et le soulèvement du tampon d'un seul geste. Elle a pour objet un tampon du type précité, caractérisé en ce que l'organe de verrouillage est constitué par un anneau comportant au moins un loquet, que le tampon présente dans sa région périphérique les moyens de retenue, constituant des moyens de retenue radiale de l'anneau, la lumière, et les moyens de support, ladite lumière étant ménagée dans une zone diamétralement opposée à la zone comportant lesdits moyens de retenue, et que l'anneau est disposé sur le tampon de telle sorte que le loquet se trouve situé à 90° de la lumière.

Suivant d'autres caractéristiques avantageuses de l'invention :
- le tampon comporte deux loquets diamétralement opposés ;
- le tampon comporte une butée limitant l'escamotage de chaque loquet ;
- les moyens de support comprennent, au droit de la lumière, une surface horizontale de guidage aboutissant, du côté extérieur, à une surface de butée verticale ;
- les moyens de support comprennent une surface de guidage horizontale au niveau du ou de chaque loquet ;
- les moyens de support comprennent deux pattes en L, au niveau des deux loquets respectivement, orientées dans le même sens ;
- le ou chaque loquet présente une surface supérieure inclinée ;
- le ou chaque loquet présente une surface inférieure inclinée formant came.

L'invention a également pour objet un regard de chaussée comprenant :
- un cadre muni d'une collerette interne, et
- un tampon tel que défini ci-dessus,
- le ou chaque loquet étant susceptible de coopérer avec la collerette du cadre pour verrouiller le tampon.

Un exemple de réalisation de l'invention va maintenant être décrit en regard des dessins annexés, sur lesquels :
La Fig. 1 est une vue en élévation d'un tampon conforme à l'invention ;
La Fig. 2 est une vue en coupe axiale d'un cadre associé à ce tampon ;
La Fig. 3 est une vue du tampon prise en coupe suivant la ligne III/III de la Fig. 1, le corps du tampon étant omis pour plus de clarté ;
La Fig.4 est une vue en coupe verticale du regard, prise suivant la ligne IV/IV de la Fig.5;
La Fig.5 est une vue prise en coupe suivant la ligne V/V de la Fig.1 ou de la Fig.4; et
Les Fig.6 et 7 sont des vues en coupe de détail, à plus grande échelle, illustrant le déverrouillage et le soulèvement du tampon.

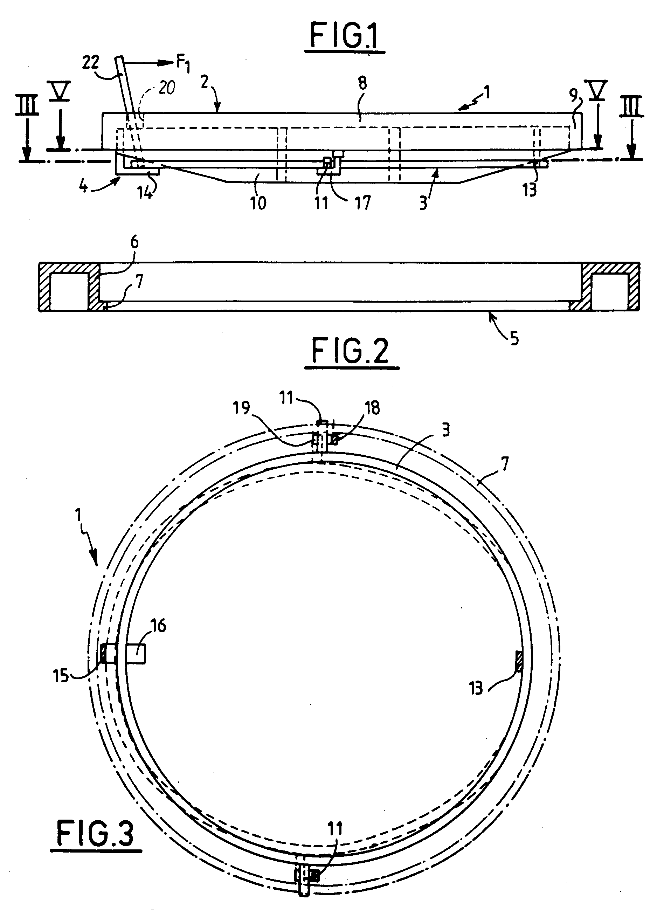

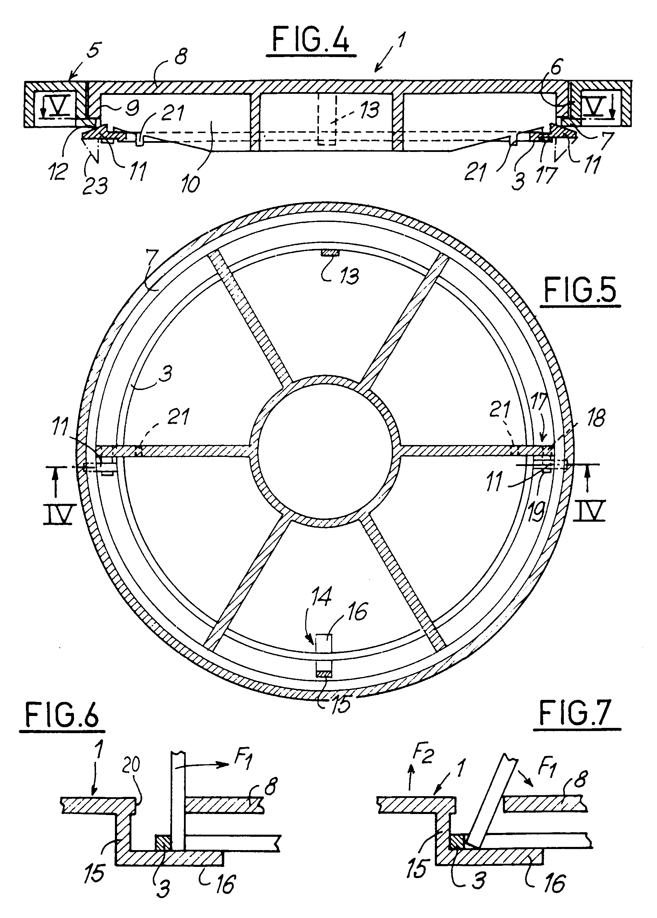

Le tampon 1 représenté aux dessins comprend essentiellement un corps principal 2, un anneau de verrouillage 3 porté par ce corps et mobile par rapport à lui d'une manière qui sera décrite plus loin, et des moyens 4 de support et de guidage de cet anneau, solidaires du corps 2. Ce tampon est destiné à coopérer avec un cadre 5 (Fig.2 et 4) comportant une jupe cylindrique 6 munie à son extrémité inférieure d'une collerette circulaire d'appui 7 en saillie vers l'intérieur. Le corps 1 et le cadre 5 sont constitués chacun par une pièce de fonderie.

Le corps 2 comporte une plaque supérieure 8 de forme circulaire et de diamètre légèrement inférieur au diamètre interne de la jupe 6. De la périphérie de cette plaque part vers le bas une paroi périphérique cylindrique 9. La face inférieure de la plaque 8 porte un nervurage de rigidification comportant six nervures radiales 10 qui s'étendent vers l'extérieur jusqu'à la paroi 9.

L'anneau 3 est constitué d'une matière élastiquement déformable qui peut être une fonte à graphite sphéroïdal, de l'acier ou tout autre matériau possédant les propriétés mécaniques appropriées. Son diamètre est quelque peu inférieur à celui de la plaque 8, et il présente en deux points diamétralement opposés un loquet 11 en saillie radiale vers l'extérieur. Comme on le voit bien à la Fig.4, chaque loquet présente une forme trapézoïdale, avec une surface supérieure 12 descendant radialement vers l'extérieur.

Les moyens 4 de support et de guidage de l'anneau 3 comprennent d'une part trois pattes à section en L (suivant le plan vertical de symétrie de chacune) voisines de la paroi 9 et situées radialement à l'intérieur de celle-ci, et d'autre part une butée verticale 13. L'une des pattes, portant la référence 14, est diamétralement opposée à la butée 13. Elle comporte une branche verticale 15 adjacente à la paroi 9, et une branche horizontale 16 s'étendant vers l'intérieur. Les deux autres pattes, référencées 17, sont prévues sur le diamètre perpendiculaire à celui qui relie la butée 13 à la patte 14. Chaque patte 17 comporte une branche verticale 18 prolongeant vers le bas une nervure 10, et une branche horizontale 19 orientée vers la patte 14. Les moyens 4 de support et de guidage peuvent être venus de fonderie avec le corps 2 ou, en variante, être rapportés sur celui-ci, par exemple par soudage.

Sur chaque branche 19 prend appui l'un des deux loquets 11, et sur la branche 16 prend appui la partie courante de l'anneau 3, lequel passe derrière la butée 13. Enfin, la plaque 8 présente une fenêtre 20 située à l'aplomb de la patte 14, et chacune des nervures 10 qui porte une patte 17 présente une butée 21 en saillie vers le bas, à une petite distance vers l'intérieur de la branche 18 correspondante.

Pour mettre l'anneau en place, après l'avoir orienté convenablement, on le pose en biais sur la branche 16, on le met en butée contre la branche 15, puis, en exerçant une poussée au point diamétralement opposé, bon provoque son ovalisation et, par suite, le déplacement simultané des deux loquets 11 vers la patte 14. Lorsque les deux loquets ont ainsi dépassé l'extrémité des branches 19, on relève l'anneau et on relâche l'effort, ce qui permet aux deux loquets de venir se positionner sur les branches 19. Enfin, en exerçant une traction sur la partie de l'anneau opposée à la patte 14, on le fait passer derrière la butée 13.

Lorsque le tampon est en place dans son cadre, la configuration est celle représentée aux Fig.4 et 5 et en trait plein à la Fig.3. La paroi 9 du tampon, centrée avec un léger jeu radial dans la jupe 6 du cadre, s'appuie sur la collerette 7 de ce dernier. L'anneau est au repos, parfaitement circulaire, et chaque loquet 11 fait légèrement saillie, dans le sens radial, au-delà de la paroi périphérique 9 du tampon. Grâce au faible jeu existant entre l'anneau et les pattes 17, les deux loquets font sensiblement saillie sur la même distance, et leurs surfaces supérieures 12 coopèrent avec la face inférieure de la collerette 7 du cadre (indiquée en trait mixte sur la Fig.3) pour assurer le verrouillage du tampon.

Pour rétracter simultanément les deux loquets, on introduit dans la lumière 20 un outil 22 de forme allongée, par exemple une barre (Fig.6). L'extrémité de cet outil vient s'insérer à l'intérieur de l'anneau, contre la branche 16 de la patte 14. On exerce alors un effort sur l'outil 22 de façon à le faire basculer vers le centre du tampon, comme indiqué par une flèche F1 à la Fig.6. Par effet de levier, l'extrémité inférieure de l'outil repousse vers l'extérieur la partie correspondante de l'anneau 3, jusqu'à l'amener en butée contre la branche 15 de la patte 14 (Fig.7). Le point diamétralement opposé de l'anneau étant retenu par la butée 13, ce mouvement provoque une ovalisation de l'anneau, illustrée en traits pointillés à la Fig.3, et par suite le retrait radial simultané des deux loquets 11. Grâce à la présence des deux butées 21 (Fig.4), le retrait de chaque loquet est limité, ce qui garantit que les deux loquets sont complètement rétractés lorsque la position de butée de la Fig.7 est atteinte. Le tampon est alors déverrouillé.

La poursuite du mouvement de basculement de l'outil 22 vers le centre du tampon provoque ensuite le soulèvement de la partie du tampon adjacente à la patte 14, comme illustré par une flèche F2 à la Fig.7. On a donc effectué d'un seul geste le déverrouillage puis l'ouverture du tampon.

La mise en place du tampon s'effectue de manière analogue : l'anneau étant ovalisé au moyen de l'outil 22, on pose la face inférieure de la paroi 9 sur la collerette 7 du cadre, puis on relâche l'anneau, de sorte que les deux loquets 11 viennent se placer sous cette collerette 7, en assurant le verrouillage du tampon. On remarque que grâce à la présence des deux surfaces inclinées 12, un rattrapage de jeu automatique est assuré, ce qui garantit l'appui effectif de deux loquets contre la collerette 7.

En variante, comme illustré en traits mixtes à la Fig.4, chaque loquet 11 pourrait comporter une surface inférieure 23 inclinée vers l'axe du regard et vers le bas, formant came. On obtiendrait ainsi, moyennant un déplacement des pattes 17 vers l'axe pour permettre le débattement des deux loquets, une possibilité d'auto-encliquetage du tampon, et l'utilisation de l'outil 22 ne serait nécessaire que pour son déverrouillage.

## Revendications

1. Tampon (1) de regard de chaussée comprenant :
- un organe de verrouillage (3) élastiquement déformable porté par des moyens de support (14, 17) et en appui sur des moyens de retenue (13) solidaires de la face inférieure du tampon, ledit organe (3) comportant un loquet (11) en saillie vers l'extérieur du tampon ;
- et une lumière (20) traversant le tampon sensiblement à l'aplomb dudit organe (3) pour l'introduction d'un outil de déverrouillage (22),
caractérisé en ce que l'organe de verrouillage (3) est constitué par un anneau comportant au moins un loquet (11), que le tampon présente dans sa région périphérique les moyens de retenue (13), constituant des moyens de retenue radiale de l'anneau, la lumière (20), et les moyens de support (14, 17), ladite lumière (20) étant ménagée dans une zone diamétralement opposée à la zone comportant lesdits moyens de retenue (13), et que l'anneau est disposé sur le tampon de telle sorte que le loquet (11) se trouve situé à 90° de la lumière (20).

2. Tampon suivant la revendication 1, caractérisé en ce qu'il comporte deux loquets (11) diamétralement opposés.

3. Tampon suivant la revendication 2, caractérisé en ce qu'il comporte une butée (21) limitant l'escamotage de chaque loquet (11).

4. Tampon suivant l'une quelconque des revendications 1 à 3, caractérisé en ce que les moyens de support (14) comprennent, au droit de la lumière (20), une surface horizontale de guidage (16) aboutissant, du côté radialement extérieur, à une surface de butée verticale (15).

5. Tampon suivant l'une quelconque des revendications 1 à 4, caractérisé en ce que les moyens de support (17) comprennent une surface de guidage horizontale (19) au niveau du ou de chaque loquet (11).

6. Tampon suivant la revendication 2 ou 3 et la revendication 5 considérées en combinaison, caractérisé en ce que les moyens de support (17) comprennent deux pattes en L (17) au niveau des deux loquets (11) respectivement, orientées dans le même sens.

7. Tampon suivant l'une quelconque des revendications 1 à 6, caractérisé en ce que le ou chaque loquet (11) présente une surface supérieure inclinée (12).

8. Tampon suivant l'une quelconque des revendications 1 à 7, caractérisé en ce que le ou chaque loquet (11) présente une surface inférieure inclinée (23) formant came.

9. Regard de chaussée comprenant :
- un cadre (5) muni d'une collerette interne (7), et
- un tampon (1) suivant l'une quelconque des revendications 1 à 8, le ou chaque loquet (11) étant susceptible de coopérer avec la collerette du cadre (5) pour verrouiller le tampon (1).

## Claims

1. Manhole cover plug (1), comprising:
- a resiliently deformable locking member (3) which is carried by support means (14, 17) and which bears on holding means (13) integral with the lower face of the plug, said member (3) having a catch (11) projecting towards the exterior of the plug;
- and an opening (20) running through the plug substantially perpendicular with respect to the said member (3) for inserting an unlocking tool (22),
characterized in that the locking member (3) is formed by a ring having at least one catch, in that in its peripheral region the plug has the holding means (13), which form means for radially holding the ring, the opening (20), and the support means (14, 17), the said opening (20) being formed in a zone which is diametrically opposed to the zone having the said holding means (13), and in that the ring is arranged on the plug such that the catch (11) is located 90° from the opening (20).

2. Plug according to Claim 1, characterized in that it has two diametrically opposed catches (11).

3. Plug according to Claim 2, characterized in that it has a stop (21) limiting the retraction of each catch (11).

4. Plug according to any one of Claims 1 to 3, characterized in that the support means (14) comprise, at the level of the opening (20), a horizontal guide surface (16) leading, on the radially outer side, to a vertical stop surface (15).

5. Plug according to any one of Claims 1 to 4, characterized in that the support means (17) comprise a horizontal guide surface (19) at the level of the or each catch (11).

6. Plug according to Claim 2 or 3 and Claim 5 considered in combination, characterized in that the support means (17) comprise two L-shaped tabs (17) at the level of the two catches (11) respectively, oriented in the same direction.

7. Plug according to any one of Claims 1 to 6, characterized in that the or each catch (11) has an inclined upper surface (12).

8. Plug according to any one of Claims 1 to 7, characterized in that the or each catch (11) has an inclined lower surface (23) forming a cam.

9. Manhole cover, comprising:
- a frame (5) provided with an internal collar (7), and
- a plug (1) according to any one of Claims 1 to 8, the or each catch (11) being able to cooperate with the collar of the frame (5) in order to lock the plug (1).

## Patentansprüche

1. Schachtabdeckung (1) mit:
- einem elastisch verformbaren Verriegelungsorgan (3), das durch Stützeinrichtungen (14, 17) getragen wird und in Anlage ist auf Rückhalteeinrichtungen (13), die mit der Unterseite der Schachtabdeckung verbunden sind, wobei das Organ (3) eine Falle oder Fallklinke (11) aufweist, die zum Äußeren der Schachtabdeckung vorspringt;
- und einer Ausnehmung (20), die sich durch die Schachtabdeckung im wesentlichen senkrecht zum Organ (3) erstreckt zum Einführen eines Entriegelungswerkzeugs (22),
dadurch gekennzeichnet, daß das Verriegelungsorgan (3) durch einen Ring gebildet wird, der wenigstens eine Falle (11) aufweist, daß die Schachtabdeckung in ihrem Umfangsbereich die Rückhalteeinrichtungen (13), die radiale Rückhalteeinrichtungen des Rings bilden, die Öffnung (20), und die Stützeinrichtungen (14, 17) aufweist, wobei die Öffnung (20) in einer Zone ausgebildet ist, die diametral entgegengesetzt ist zur Zone, die die Rückhalteeinrichtungen (13) aufweist, und daß der Ring auf der Schachtabdeckung derart angeordnet ist, daß die Falle (11) sich um 90° zur Öffnung (20) befindet.

2. Schachtabdeckung nach Anspruch 1, dadurch gekennzeichnet, daß sie zwei Fallen (11) aufweist, die diametral entgegengesetzt angeordnet sind.

3. Schachtabdeckung nach Anspruch 2, dadurch gekennzeichnet, daß sie einen Anschlag (21) aufweist, der das Einziehen einer jeden Falle (11) begrenzt.

4. Schachtabdeckung nach einem der Ansprüche 1 bis 3, dadurch gekennzeichnet, daß die Stützeinrichtungen (14) in der Öffnung (20) eine horizontale Führungsoberfläche (16) aufweisen, die auf der radial äußeren Seite in eine vertikale Anschlagfläche (15) mündet.

5. Schachtabdeckung nach einem der Ansprüche 1 bis 4, dadurch gekennzeichnet, daß die Stützeinrichtungen (17) eine horizontale Führungsoberfläche (19) auf der Höhe der oder jeder Falle (11) aufweisen.

6. Schachtabdeckung nach Anspruch 2 oder 3 und nach Anspruch 5, in Kombination betrachtet, dadurch gekennzeichnet, daß die Stützeinrichtungen (17) zwei Krampen oder Schenkel in L-Form (17) auf der Höhe der beiden Fallen (11) entsprechend aufweisen, die in dieselbe Richtung gerichtet sind.

7. Schachtabdeckung nach einem der Ansprüche 1 bis 6, dadurch gekennzeichnet, daß die oder jede Falle (11) eine geneigte obere Oberfläche (12) aufweist.

8. Schachtabdeckung nach einem der Ansprüche 1 bis 7, dadurch gekennzeichnet, daß die oder jede Falle (11) eine geneigte untere Oberfläche (23) aufweist, die einen Nocken bildet.

9. Schacht mit:
- einem Rahmen (5), der mit einem inneren Kragen (7) versehen ist, und
- einer Schachtabdeckung (1) nach einem der Ansprüche 1 bis 8, wobei die oder jede Falle (11) in der Lage ist, mit dem Kragen des Rahmens (5) zusammenzuwirken, um die Schachtabdeckung (1) zu verriegeln.
